## Europäisches Patentamt
## European Patent Office
## Office européen des brevets

(19)

(11) Veröffentlichungsnummer: **0 143 934**
**B1**

(12)

# EUROPÄISCHE PATENTSCHRIFT

(45) Veröffentlichungstag der Patentschrift:
**22.07.87**

(21) Anmeldenummer: **84111490.3**

(22) Anmeldetag: **26.09.84**

(51) Int. Cl.⁴: **B 62 L 1/10,** B 62 L 3/02,
F 16 D 55/228

(54) **Hydraulische Felgenbremse für Fahrräder.**

(30) Priorität: **05.10.83 DE 3336123**

(43) Veröffentlichungstag der Anmeldung:
**12.06.85 Patentblatt 85/24**

(45) Bekanntmachung des Hinweises auf die Patenterteilung:
**22.07.87 Patentblatt 87/30**

(84) Benannte Vertragsstaaten:
**AT CH DE FR IT LI NL**

(56) Entgegenhaltungen:
**EP-A-0 080 630**
**FR-A-343 644**
**FR-A-2 152 676**
**GB-A-2 100 814**
**US-A-3 870 127**
**US-A-4 175 648**
**US-A-4 391 353**

(73) Patentinhaber: **Gustav Magenwirth GmbH & Co.,**
**Stuttgarter Strasse 48, D-7432 Urach 1 (DE)**

(72) Erfinder: **Rottenkolber, Ludwig, Eichhaldestrasse**
**44, D-7432 Bad Urach (DE)**
Erfinder: **Schwab, Manfred, Gerokstrasse 5, D-7318**
**Lenningen 1 (DE)**

(74) Vertreter: **Hoeger, Stellrecht & Partner,**
**Uhlandstrasse 14c, D-7000 Stuttgart 1 (DE)**

## Beschreibung

Die Erfindung betrifft eine hydraulische Felgenbremse für Fahrräder mit einer am Lenker des Fahrrades befestigten, durch einen Handhebel betätigten Auslösevorrichtung, mit zwei am Rahmen des Fahrrades einander gegenüberliegend befestigten und eine Radfelge zwischen sich einschließenden Bremszylindergehäusen, die durch Druckleitungen mit der Auslösevorrichtung verbunden sind, mit in den Bremszylindergehäusen verschieblichen Kolben und mit an diesen Kolben angeordneten Bremsklotzträgern, die an der Felge angreifende Bremsklötze tragen, wobei die Bremsklotzträger als mit dem Kolben verbundene Flansche ausgebildet sind.

Bei bekannten Bremsen dieser Art z.B FR-PS 343 644, die den Oberbegriff des Hauptanspruchs entspricht, ragen die Bremsklotzträger frei und verhältnismäßig weit aus den Bremszylindergehäusen heraus. Hierdurch können sich beim Bremsen am Kolben beträchtliche Biegemomente auswirken, welche auf Dauer die Leichtgängigkeit der Felgenbremse beeinträchtigen und somit ein Sicherheitsrisiko darstellen können.

Es ist Aufgabe der Erfindung, diesem Mangel abzuhelfen und die am Bremsklotzträger auftretenden Bremskräfte so aufzufangen, daß sie die Führung des Kolbens im Bremszylindergehäuse nicht beeinträchtigen können.

Die Aufgabe wird erfindungsgemäß dadurch gelöst, daß die Flansche jeweils in einer am Bremszylindergehäuse vorgesehenen Gleitführung parallel zur Bremskolbenbewegung verschieblich sind, und daß die Gleitführungen gleichzeitig als Widerlager zur Aufnahme der Bremskräfte ausgebildet sind.

Die nachstehende Beschreibung bevorzugter Ausführungsformen der Erfindung dient im Zusammenhang mit beiliegender Zeichnung der weiteren Erläuterung. Es zeigen:

Fig. 1 ein Fahrrad mit hydraulischen Felgenbremsen in Seitenansicht;

Fig. 2 eine Teil-Vorderansicht der Felgenbremse in Richtung des Pfeiles A in Fig. 1;

Fig. 3 eine Ansicht in Richtung des Pfeiles B in Fig. 2;

Fig. 4 eine Schnittansicht entlang der Linie 4-4 in Fig. 3;

Fig. 5 eine Schnittansicht entlang der Linie 5-5 in Fig. 2;

Fig. 6 eine Ansicht in Richtung des Pfeiles C in Fig. 2;

Fig. 7 eine Schnittansicht entlang der Linie 7-7 in Fig. 4 und

Fig. 8 eine Draufsicht ähnlich Fig. 6 einer anderen Ausführungsform einer hydraulischen Felgenbremse.

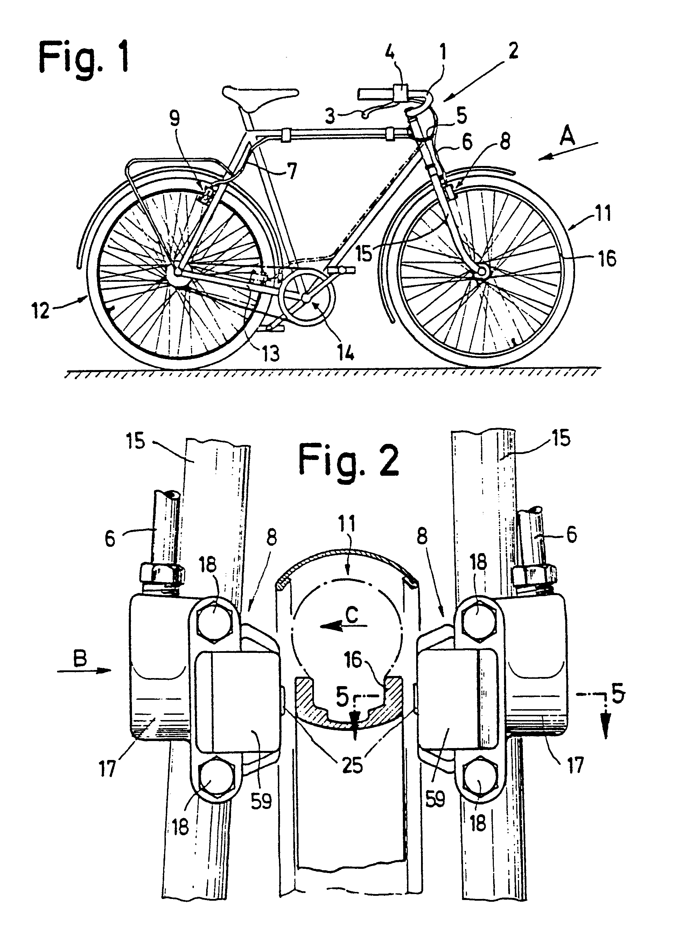

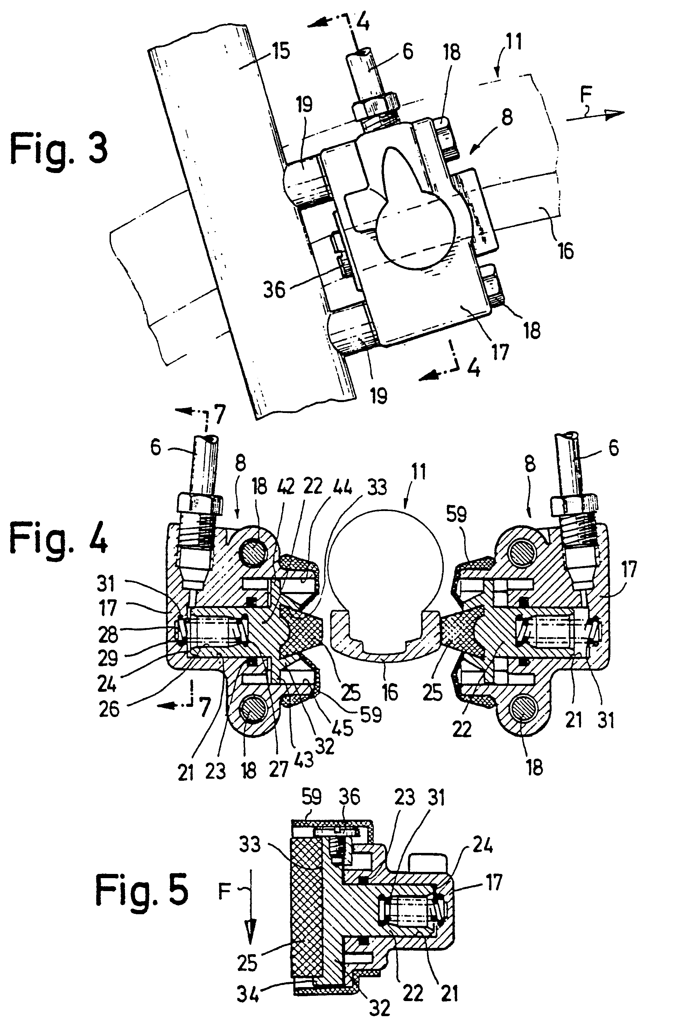

Am Lenker 1 des in Fig. 1 dargestellten Fahrrades 2 ist eine durch einen Handhebel 3 betätigte, hydraulische Auslösevorrichtung 4 angeordnet. Die Auslösevorrichtung 4 umfasst in an sich bekannter Weise einen Geberzylinder und einen darin verschieblichen, vom Handhebel 3 verschiebbaren Kolben. Die Auslösevorrichtung 4 ist über Druckleitungen 5, 6 oder 7 mit hydraulischen Felgenbremsen verbunden, die an den Felgen der Vorder- oder Hinterräder 11 bzw. 12 des Fahrrades angreifen. Beim Betätigen der Auslösevorrichtung 4 werden die Felgenbremsen 8 oder 9 in an sich bekannter Weise ausgelöst, so daß sich deren Bremsklötze beidseitig an die Felgen der Räder 11 bzw. 12 anpressen. Die Felgenbremse 8 ist an der Gabel des Vorderrades 11, die Bremse 9 an der Gabel des Hinterrades 12 befestigt. Wie in Fig. 1 strichpunktiert dargestellt, könnte die am Hinterrad 12 angeordnete Felgenbremse auch an einem Rahmenteil 13 des Fahrrades befestigt sein, welches die Tretkurbel 14 mit der Achse des Hinterrades 12 verbindet.

Wie aus Fig. 2 hervorgeht, umfasst die Felgenbremse 8 zwei an der Vorderradgabel 15 einander gegenüberliegend befestigte, die Radfelge 16 des Vorderrades 11 zwischen sich einschließende Bremszylindergehäuse 17, die durch die vorzugsweise als Schläuche ausgebildeten Druckleitungen 6 mit der Auslösevorrichtung 4 verbunden sind. Die Bremszylindergehäuse 17 sind mittels Schrauben 18 an der Vorderradgabel 15 befestigt, wobei - vgl. Fig. 3 - an der Gabel 15 entsprechende Befestigungsansätze 19 vorgesehen sein können.

Wie am besten aus Fig. 4 ersichtlich, ist in einer Bohrung 21 jedes Bremszylindergehäuses 17 ein Kolben 22 verschieblich gelagert und durch eine Dichtung 23 abgedichtet. An der mit dem Bezugszeichen 24 bezeichneten Kolbenrückseite kann bei Betätigung der Auslösevorrichtung 4 über die Druckleitung 6 ein Hydraulikmedium eingepresst werden, so daß sich der Kolben 22 zur Felge 16 hin bewegt. An der Vorderseite des Kolbens 22 ist in noch zu beschreibender Weise ein Bremsklotz 25 befestigt, der sich an die Felge 16 anlegt und hierdurch die Abbremsung des Rades vollzieht. Bei dem in Fig. 4 rechts gezeichneten Bremszylindergehäuse 17 ist angenommen, daß die Auslösevorrichtung 4 betätigt und dementsprechend der Bremsklotz 25 in Anlage an die Felge 16 gelangt ist. (In Wirklichkeit legen sich bei Auslösung der Bremse natürlich beide Bremsklötze 25 an die Radfelge 16 an.)

Im Kolben 22 ist eine zu seiner Rückseite 24 hin offene Sackbohrung 26 ausgebildet, die sich an ihrer geschlossenen Seite zu einer Hinterschneidung 27 erweitert. Das Bremszylindergehäuse 17 weist eine zur Bohrung 26 koaxiale Sackbohrung 28 auf, die an ihrem geschlossenen Ende ebenfalls mit einer Hinterschneidung 29 versehen ist. Die beiden miteinander ausgefluchteten Bohrungen 26, 28 nehmen eine zylindrische Schraubenzugfeder 31 auf, deren beide Endwindungen einen größeren Durchmesser als die übrigen Windungen haben. Der Außendurchmesser dieser Endwindungen entspricht dabei dem Innendurchmesser der Hinterschneidungen 27, 29, während der Durchmesser der übrigen Schraubenwindungen kleiner als der Durchmesser der Bohrungen 26, 28 ist. Wenn die Schraubenfeder 31 in die Bohrungen 26, 28 eingelegt und Kolben und Bremszylindergehäuse zusammengedrückt werden, so rasten die Endwindungen der Feder 31, weil sie sich elastisch verformen, in die Hinterschneidungen 27 bzw. 29 ein, so daß Bremszylindergehäuse 17 und Kolben 22 nunmehr durch die Schraubenzugfeder 31 miteinander verbunden sind. Die Schraubenfeder 31 dient als Rückholfeder und zieht den Kolben bei Beendigung eines Bremsvorganges in seine Ausgangsstellung (Fig. 4, links) zurück. Die.Anordnung der Bohrungen 26, 28 mit ihren Hinterschneidungen ist so getroffen, daß die Endwindungen der Schraubenfeder 31 zwar leicht eingedrückt, aber nur schwer wieder herausgezogen werden können.

Der Kolben 22 weist an seiner Vorderseite einen als Bremsklotzträger dienenden, seitlich vorspringenden Flansch 32 auf, an dem der Bremsklotz 25 befestigt ist. Hierzu weist der Flansch 32 eine Schwalbenschwanznut 33 auf in welche der entsprechend profilierte Bremsklotz 25 eingeschoben ist. Dabei stößt der Bremsklotz 25 stirnseitig an einen Anschlag 34 des Flansches 32 an. Nach dem Einschieben wird der Bremsklotz 25 durch den Kopf einer Schraube 36 an einem Zurückverschieben und Herausfallen gehindert. Das Einschieben des Bremsklotzes 25 in die Schwalbenschwanznut 33 erfolgt dabei in Fahrtrichtung (Pfeil F) des Fahrrades, so daß beim Bremsen der Bremsklotz 25 gegen den Anschlag 34 gepresst wird.

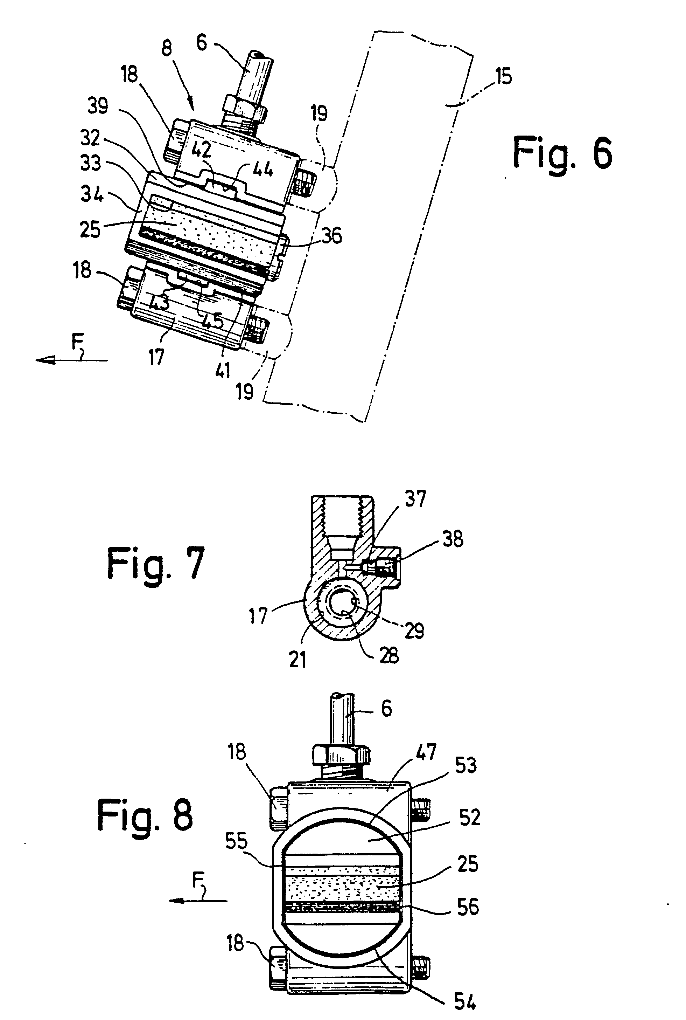

Das Bremszylindergehäuse 17 weist ferner (vgl. Fig.7) eine Entlüftungsbohrung 37 auf, in welche eine Verschlußschraube 38 eingedreht ist. Die Entlüftungsbohrung 37 ist normalerweise durch die Schraube 38 druckdicht verschlossen und wird nur beim Befüllen der Anlage mit Hydraulikmedium geöffnet.

Wie aus der Zeichnung, vgl. insbesondere Fig. 4 und 6, hervorgeht, umschließt das Bremszylindergehäuse 17 nicht nur den Kolben 22 sondern auch den von diesem abstehenden Flansch 32, und zwar derart, daß das Gehäuse eine Gleitführung für diesen Flansch bildet, die parallel zur Bremskolbenbewegung verläuft. Bei der Ausführungsform gemäß Fig. 4 und 6 ist der im wesentlichen rechteckig ausgebildete Flansch 32 zwischen parallel einander gegenüberliegenden Flächen 39, 41 geführt. Am Flansch 32 sind im Bereich der Flächen 39, 41 zwei als parallel zur Achse des Kolbens 22 verlaufende, als Federn ausgebildete Vorsprünce 42, 43 ausgebildet. die in entsprechende, als Nuten ausgebildete Aussparungen 44 bzw. 45 des Gehäuses 17 gleitverschieblich eingreifen. Auf diese Weise ist das Bewegen des Bremsklorzes 25 relativ zur Felge 16 nicht behindert. Bei einem Abbremsvorgang treten in Fahrtrichtung F (Fig. 6) wirkende Bremskräfte auf, welche die in Fahrtrichtung gerichreten Flanken der Vorsprünge 42, 43 an ihnen zugekehrte Wände der Aussparungen 44 bzw. 45 anlegen. Auf diese Weise wirken diese Wände der Gleitführungsaussparungen als Widerlager für die Aufnahme der auftretenden Bremskräfte. Da diese Bremskraftaufnahme unmittelbar im Bereich des als Bremsklotzträger dienenden Flansches 32 erfolgt, können sich diese im Bereich des Kolbens und des diesen führenden Bremszylindergehäuses nicht störend auswirken.

Besonders vorteilhaft ist es, wenn, wie dargestellt, sowohl Kolben 22 und Flansch 32 einstückig miteinander verbunden sind als auch die Gleitführung (Aussparungen 44, 45) einstückig am Bremszylindergehäuse 17 ausgebildet ist.

Die einander gegenüberliegenden, parallelen Flächen 39, 41 der Gleitführung verhindern im übrigen auch in Verbindung mit den entsprechenden Flächen der Vorsprünge 42, 43 und Aussparungen 44, 45, daß sich der mit dem Kolben 22 verbundene Flansch 32 und der an ihm befestigte Bremsklotz 25 verdrehen. Der Bremsklotz 25 behält also insbesondere auch während des Bremsvorgangs, bei dem erhebliche, tordierend wirkende Kräfte auf ihn einwirken können, seine Lage relativ zur Felge 16 bei, so daß stets die volle Bremswirkung gewährleistet ist.

Das in Fig. 8 dargestellte Bremszylindergehäuse 47 entspricht in seinem grundsätzlichen Aufbau dem beschriebenen Bremszylindergehäuse 17. In Fig. 8 sind einander entsprechende Teile mit den gleichen Bezugszeichen wie in Fig. 1 bis 7 bezeichnet. Der wesentliche Unterschied zur Ausführungsform gemäß Fig. 1 bis 7 besteht darin, daß der mit den Kolben der Bremse verbundene Flansch 52 von zwei kreiszylindrischen Flächen 53, 54 und diese Flächen unterbrechenden, ebenen Flachseiten 55, 56 begrenzt ist. Die Flächen 53, 54, 55, 56 liegen an einer entsprechend ausgebildeten Innenkontur des Bremszylindergehäuses 47 gleitverschieblich an, so daß der Flansch 52 - ebenso wie der Flansch 32 der Ausführungsform gemäß Fig. 1 bis 7 - in einer Gleitführung stabil geführt ist, die im Hinblick auf die Fahrtrichtung F gleichzeitig im Bereich der ebenen Fläche 55 ein Widerlager zur Aufnahme auftretender Bremskräfte bildet. Im übrigen dient diese Gleitführung gemäß Fig. 8 auch als Verdrehungssicherung für den Flansch 52 und den mit ihm verbundenen Bremsklotz 25, da die kreiszylindrische Form des Flansches durch die beiden ebenen Flächen 55, 56 unterbrochen ist und sich der Flansch somit in seiner Führung nicht verdrehen kann.

Die beschriebenen hydraulischen Felgenbremsen werden vorzugsweise so am Rahmen des Fahrrades befestigt, daß sie von den beim Bremsen auftretenden Kräften an den Rahmen angedrückt werden. Dies trifft in Fig. 1 für die Bremse 9 und die ihr entsprechende, am Rahmenteil 13 angeordnete Bremse zu. Die in Fig. 1 mit 8 bezeichnete Bremse ist jedoch im Hinblick auf eine optimale Ausrichtung zur Felge so angeordnet, daß sie von auftretenden Bremskräften nicht an die Gabel 15 angepresst wird. Welche Anordnung der hydraulischen Bremsen besonders vorteilhaft ist, muß im Einzelfall unter Abwägung der vorliegenden Umstände entschieden werden.

Wie schließlich aus der Zeichnung noch hervorgeht, ist zwischen Bremszylindergehäuse 17 und dem Flansch 32 des Kolbens 22 ein elastisch ausdehnbarer Balg 59 angeordnet, der das Eindringen von Schmutz in die Bremse verhindert.

**Patentansprüche**

1. Hydraulische Felgenbremse für Fahrräder mit einer am Lenker des Fahrrades befestigten, durch einen Handhebel berätigten Auslösevorrichrung, mit zwei am Rahmen des Fahrrades einander gegenüberliegend befestigten und eine Radfelge zwischen sich einschließenden Bremszylindergehäusen, die durch Druckleitungen mir der Auslösevorrichtung verbunden sind, mit in den Bremszylindergehäusen verschieblichen Kolben und mit an diesen Kolben angeordneten Bremsklotzträgern, die an der Felge angreifende Bremsklötze tragen, wobei die Bremsklotzträger als mit dem Kolben (22) verbundene Flansche (32, 52) ausgebildet sind, dadurch gekennzeichnet, daß die Flansche (32, 52) jeweils in einer am Bremszylindergehäuse (17, 47) vorgesehenen Gleitführung (42, 43, 44, 45; 53, 54, 55, 56) parallel zur Bremskolbenbewegung verschieblich sind, und daß die Gleitführungen gleichzeitig als Widerlager zur Aufnahme der Bremskräfte ausgebildet sind.

2. Bremse nach Anspruch 1, dadurch gekennzeichnet, daß Kolben (22) und Flansch (32, 52) einstückig miteinander verbunden sind.

3. Bremse nach Anspruch 1 oder 2, dadurch gekennzeichnet, daß die Gleitführung einstückig am Bremszylindergehäuse (17, 47) ausgebildet ist.

4. Bremse nach Anspruch 1, 2 oder 3, dadurch gekennzeichnet, daß als Widerlager am Flansch (32) wenigstens ein Vorsprung (42, 43) vorgesehen ist, der in eine komplementär ausgebildete Aussparung (44, 45) des Bremszylindergehäuses (17) eingreift.

5. Bremse nach Anspruch 4, dadurch gekennzeichnet, daß der Vorsprung (42, 43) und die Aussparung (44, 45) als parallel zur Achse des Kolbens (22) verlaufende Feder und Nut ausgebildet sind.

6. Bremse nach einem der Ansprüche 1 bis 5, dadurch gekennzeichnet, daß der Flansch (32, 52) im Bremszylindergehäuse (17, 47) verdrehungssicher geführt ist.

7. Bremse nach Anspruch 6, dadurch gekennzeichnet, daß der Flansch (32, 52) mindestens teilweise in einer Ausnehmung des Bremszylindergehäuses (17, 47) geführt ist und im Bereich der Führung (55, 56) die ineinander eingreifenden Konturen von Flansch und Ausnehmung nicht aus zur Achse des Kolbens (22) konzentrischen Kreisen bestehen.

8. Bremse nach einem der voranstehenden Ansprüche, dadurch gekennzeichnet, daß der Kolben (22) zum Zwecke seiner Rückholung durch eine Zugfeder (31) mit dem Bremszylindergehäuse (17) verbunden ist, daß die Zugfeder als Schraubenfeder ausgebildet ist, deren beide Endwindungen einen größeren Durchmesser als die übrigen Windungen haben, und daß je eine Endwindung in eine Hinrerschneidung (27, 29) des Kolbens (22) bzw. des Bremszylindergehäuses (17) eingerastet ist.

9. Bremse nach einem der voranstehenden Ansprüche, dadurch gekennzeichnet, daß die Bremszylindergehäuse (17, 47) so am Fahrradrahmen (13, 15) befestigt sind, daß sie die Bremskräfte an den Rahmen andrücken.

10. Bremse nach einem der voranstehenden Ansprüche, dadurch gekennzeichnet, daß zwischen Bremszylindergehäuse (17, 47) und Flansch (32, 52) als Schmutzsicherung ein elastisch ausdehnbarer Balg (59) angeordnet ist.

**Claims**

1. A hydraulic rim brake for bicycles with a release device fixed on the handlebar of the bicycle and actuated by a hand lever, with two brake cylinder housings mounted facing each other on the frame of the bicycle and enclosing a wheel rim between them, which housings are connected by means of pressure ducts with the release device, with pistons slidable in the brake cylinder housings and with brake block holders mounted on said pistons, which holders carry brake blocks engaging on the rim, characterised in that the brake block holders are constructed as flanges (32, 52) connected with the piston (22), the flanges (32, 52) being in each instance slidable parallel with the brake piston movement in a slideway (42, 43, 44, 45; 53, 54, 55, 56) fitted on the brake cylinder housing (17, 47), and in that the slideways are designed at the same as stops to absorb the braking forces.

2. A brake according to Claim I, characterised in that the piston (22) and the flange (32, 52) are joined together as one piece.

3. A brake according to Claim 1 or 2, characterised in that the slideway is constructed as one piece on the brake cylinder housing (17, 47).

4. A brake according to Claim 1, 2 or 3, characterised in that at least one projection (42, 43) is provided as a stop on the flange (32), which projection engages into a complementarily formed recess (44, 45) of the brake cylinder housing (17).

5. A brake according to Claim 4, characterised in that the projection (42, 43) and the recess (44, 45) are constructed as key and slot extending parallel with the axis of the piston (22).

4

## 7

6. A brake according to one of Claims 1 to 5, characterised in that the flange (32, 52) is guided in the brake cylinder housing (17, 47) solid against torsion.

7. A brake according to Claim 6, characterised in that the flange (32, 52) is guided at least partly in a recess of the brake cylinder housing (17, 47) and in the region of the guide (55, 56) the mutually engaging profiles of flange and recess do not consist of circles concentric with the axis of the piston (22).

8. A brake according to one of the foregoing claims, characterised in that the piston (22) is connected with the brake cylinder housing (17) by a tension spring (31) for its return, in that the tension spring is designed as a helical spring the two end turns of which have a greater diameter than the remaining turns, and in that one end turn each is engaged into a rear cut (27, 29) of the piston (22) or of the brake cylinder housing (17).

9. A brake according to one of the foregoing claims, characterised in that the brake cylinder housings (17, 47) are fixed to the bicycle frame (13, 15) in such a manner that they apply the braking forces onto the frame.

10. A brake according to one of the foregoing claims, characterised in that elastically expansible bellows (59) are disposed between brake cylinder housing (17, 47) and flange (32, 52) as protection against dirt.

## 143 934

8

4. Frein selon la revendication 1, 2 ou 3, caractérisé en ce qu'il est prévu, comme butée d'appui sur la bride (32), au moins un élément saillant (42, 43) qui est engagé dans un évidement (44, 45) complémentaire du corps de cylindre de frein (17).

5. Frein selon la revendication 4 caractérisé en ce que l'élément saillant (42, 43) et l'évidement (44, 45) sont réalisés comme une languette et une rainure parallèles à l'axe du piston (22).

6. Frein selon l'une des revendications 1 à 5, caractérisé en ce que la bride (32, 52) est guidée dans le corps de cylindre de frein (17, 47), en étant immobilisée en rotation.

7. Frein selon la revendication 6, caractérisé en ce que la bride (32, 52) est guidée au moins en partie dans un évidement du corps de cylindre de frein (17, 47) et dans la région de la glissière (55, 56), les contours se contenant l'un l'autre de la bride et de l'évidement ne consistent pas en cercles concentriques à l'axe du piston (22).

8. Frein selon l'une des revendications précédentes, caractérisé en ce que le piston (22) est relié, pour son rappel, au corps de cylindre de frein (17) par un ressort de traction (31), le ressort de traction est constitué par un ressort hélicoïdal dont les deux spires terminales ont un plus grand diamètre que les autres spires, et chaque spire terminale est accrochée respectivement dans une gorge arrière (27, 29) du piston (22) et du corps de cylindre de frein (17).

9. Frein selon l'une des revendications précédentes caractérisé en ce que les corps de cylindre de frein (17, 47) sont fixés au cadre (13, 15) de la bicyclette de façon que les forces de freinage les appuient contre le cadre.

10. Frein selon l'une des revendications précédentes caractérisé en ce qu'un soufflet extensible élastiquement de protection contre les impuretés est disposé entre le corps de cylindre de frein (17, 47) et la bride (32, 52).

## Revendications

1. Frein hydraulique de jante pour bicyclette, ayant, fixé au guidon de cette dernière, un dispositif de déclenchement actionné par un levier à main, avec deux corps de cylindre de frein fixés au cadre de la bicyclette l'un en face de l'autre et embrassant entre eux une jante de roue, qui sont reliés au dispositif de déclenchement par des tubulures de pression, avec des pistons coulissant dans les corps de cylindre de frein et des supports de patins de frein montés sur ces pistons et qui supportent des patins de frein agissant sur la jante, dans lequel les supports de patins de frein sont conformés comme des brides (32, 52) réunies au piston (22), caractérisé en ce que les brides (22, 52) sont montées chacune coulissantes parallèlement au mouvement du piston de frein dans une glissière de guidage (42, 43, 44, 45; 53, 54, 55, 56) prévue sur le corps de cylindre de frein (17, 47), et en ce que les glissières constituent en même temps des butées d'appui pour absorber les forces de freinage.

2. Frein selon la revendication 1, caractérisé en ce que le piston (22) et la bride (32, 52) sont réunis l'un à l'autre en constituant une seule pièce.

3. Frein selon la revendication 1 ou 2, caractérisé en ce que la glissière constitue une seule pièce avec le corps de cylindre de frein (17, 47).

# Fig. 1

# Fig. 2

143 934

Fig. 3

Fig. 4

Fig. 5

Fig. 6

Fig. 7

Fig. 8